# EUROPÄISCHE PATENTSCHRIFT

(11) **EP 2 213 556 B1**
(45) Veröffentlichungstag und Bekanntmachung des Hinweises auf die Patenterteilung: **27.06.2012**
(21) Anmeldenummer: 09015394.1
(22) Anmeldetag: 12.12.2009
(51) Int. Cl.: B62D 65/00, B62D 65/02, B62D 65/18

(54) **Fertigungssystem mit austauschbaren Aufnahmewerkzeugen**
Manufacturing system with exchangeable handling tools
Système de fabrication avec outils de manipulation échangeables

(30) Priorität: 30.01.2009 DE 102009006749
(43) Veröffentlichungstag der Anmeldung: 04.08.2010
(73) Patentinhaber: Bayerische Motoren Werke, 80809 München (DE)
(72) Erfinder: Wagner, Herbert, 94481 Grafenau (DE); Heinz, Robert, 85774 Unterföhring (DE); Speiseder, Markus, 94333 Geiselhöring (DE); Adler, Rudolf, 84371 Triftern (DE)
(74) Vertreter: Bücken, Helmut

(56) Entgegenhaltungen:
- EP-A1- 2 138 388
- EP-A1- 2 149 422
- WO-A1-87/03236
- DE-A1- 3 914 970
- DE-U1- 20 304 022
- FR-A1- 2 728 186

## Beschreibung

Die Erfindung bezieht sich auf ein Fertigungssystem für Bau- und insbesondere Karosseriebauteile, mit austauschbaren, jeweils einzeln durch eine Transporteinrichtung beförderten Bauteil-Aufnahmewerkzeugen, nach dem Oberbegriff des Patentanspruchs 1.

Zur Serienfertigung von Karosseriebauteilen ist es bekannt, diese auf jeweils bauteilspezifischen Aufnahmewerkzeugen von einer Eingabestelle, wo die Bauteile unter lagegenauer Fixierung in die Aufnahmewerkzeuge eingesetzt werden, zu einer oder nacheinander mehreren Bearbeitungs-, z. B. Schweißstationen zu befördern und im Anschluss an die Bauteilbearbeitung den Aufnahmewerkzeugen zu entnehmen, woraufhin diese im nunmehr entladenen Zustand zur Eingabestelle zurückbefördert und dort erneut bauteilbeladen werden. Der Transport der Aufnahmewerkzeuge zu den einzelnen Arbeitsstationen erfolgt mit Hilfe eines Einfach- oder Mehrfachförderers, durch den die Aufnahmewerkzeuge von Station zu Station überführt und an diesen jeweils für die Dauer des zugeordneten Arbeitsschrittes positioniert werden. Bei typenvariablen Fertigungssystemen sind im Transportbereich des Förderers von diesem bei einem Wechsel des Bauteiltyps zusätzlich angesteuerte Werkzeugwechselstationen angeordnet, an denen das bisher am Förderer angedockte Aufnahmewerkzeug gegen ein dem neuen Bauteiltyp entsprechend anderes ausgetauscht wird. Während Mehrfachförderer, etwa in Form von Drehtischen, einen hohen Bau- und Investitionsaufwand erfordern und daher zumeist nur für eine Großserienfertigung in Betracht kommen, ist der Einsatz von Einfachförderern, z. B. eines handelsüblichen Transportroboters, zwar weit kostengünstiger und auch bewegungsflexibler, hat aber den prozesstechnischen Nachteil, dass die einzelnen Arbeitsschritte, also das Beladen, Bearbeiten und Entladen der Bauteile, zeitlich nacheinander ablaufen und sich zu entsprechend langen Fertigungstaktzeiten aufsummieren.

Ein gattungsgemäßes Fertigungssystem ist aus der FR 2 728 186 A1 bekannt.

Demgegenüber ist es Aufgabe der Erfindung, ein Fertigungssystem der eingangs genannten Art mit einem Einzeltransport der Aufnahmewerkzeuge so auszubilden, dass vor allem auf Grund deutlich verkürzter Taktzeiten eine wesentlich rationellere Bauteilfertigung erzielt wird.

Diese Aufgabe wird erfindungsgemäß durch ein Fertigungssystem mit den Merkmalen des Patentanspruchs 1 gelöst.

Bei dem erfindungsgemäßen Fertigungssystem sind trotz Verwendung einer Einzeltransporteinrichtung ständig zwei Aufnahmewerkzeuge und ebenso zwei jeweils in einer Doppelfunktion sowohl zum Be- als auch zum Entladen betriebene Ladestationen im Einsatz, und zwar im Fertigungstakt alternierend, derart, dass die Aufnahmewerkzeuge wechselweise an den Ladestationen von der Transporteinrichtung ab- und an diese angekuppelt werden und das jeweils angekoppelte und zuvor neu beladene Aufnahmewerkzeug an die Bearbeitungsstation befördert und dort durch die Transporteinrichtung für die Dauer des Bearbeitungsvorgangs lagegerecht gehalten wird, während gleichzeitig das fertig bearbeitete Bauteil dem an der Ladestation abgekoppelten Aufnahmewerkzeug entnommen und dieses mit dem nächsten - noch unbearbeiteten - Bauteil bestückt wird, mit dem Ergebnis, dass der Be- und Entladevorgang zeitlich mit der Bauteilbearbeitung zusammenfällt und demzufolge der Fertigungstakt signifikant verkürzt wird, obwohl die Transporteinrichtung lediglich für eine Einzelförderung der Aufnahmewerkzeuge ausgebildet sein muss.

In Verbindung mit der Verwendung zweier, jeweils in Doppelfunktion sowohl zum Entladen als auch zum Beladen vorgesehener Ladestationen wird nach einer Variante der Erfindung eine unter dem Gesichtspunkt einer rationellen Fertigung ganz wesentliche Verbesserung dadurch erzielt, dass die Ladestationen räumlich zu einer Doppelstation kombiniert sind, so dass ein einziger Werker oder eine einzige Übergabevorrichtung ausreicht, um beide Ladestationen gemeinsam mit der jeweils erforderlichen Bauteilaus- und -eingabe zu versorgen.

Ein weiterer wesentlicher Aspekt der Erfindung ergibt sich aus dem taktmäßig alternierenden An- und Abkuppeln der Aufnahmewerkzeuge an den in Doppelfunktion betriebenen Ladestationen. Hierdurch ist es möglich, nicht nur typengleiche Bauteile in kontinuierlicher Folge, sondern mit ein und demselben, typenmäßig unterschiedlichen Werkzeugpaar sogar zwei verschiedenartige Bauteilmodelle abwechselnd in aufeinanderfolgenden Fertigungszyklen zu bearbeiten.

Wahlweise oder zusätzlich ist zur Bearbeitung unterschiedlicher Bauteiltypen in praktisch beliebiger Anzahl und/oder im freien Mix, wie an sich bekannt, im Arbeitsbereich der Transporteinrichtung vorzugsweise eine Werkzeugwechselstelle zum gegenseitigen Austausch zweier typenmäßig unterschiedlicher Aufnahmewerkzeuge angeordnet. Dabei ist das an der Wechselstelle eingeschleuste Aufnahmewerkzeug zweckmäßigerweise bereits mit einem unbearbeiteten Bauteil vorbestückt, so dass das Aufnahmewerkzeug nicht erst unter Verzögerung des Fertigungstaktes zu einer Ladestation verfahren und dort bauteilbeladen werden muss, sondern zusammen mit dem unbearbeiteten Bauteil unmittelbar der Bauteilbearbeitung zugeführt werden kann.

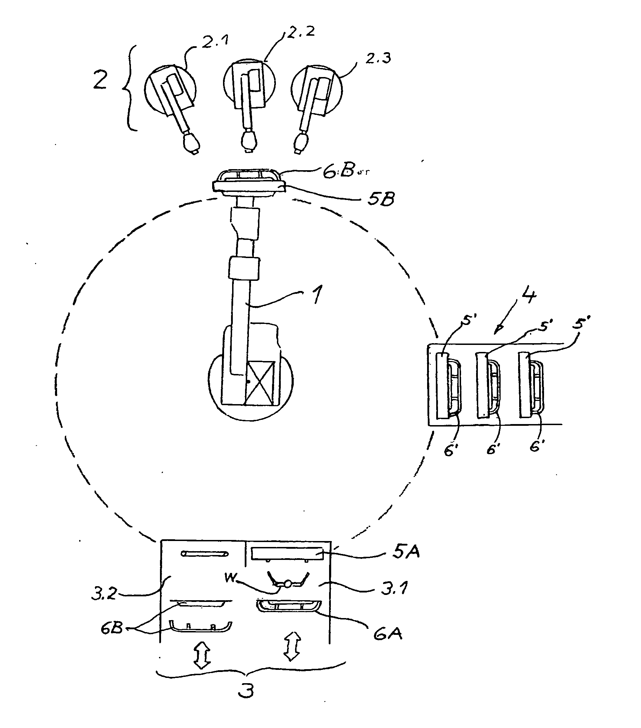

Die Erfindung wird nunmehr anhand eines bevorzugten Ausführungsbeispiels in Verbindung mit der Zeichnung näher erläutert. Diese zeigt in ihrer einzigen Figur ein erfindungsgemäß ausgebildetes Fertigungssystem in stark schematisierter Darstellung.

Das gezeigte Fertigungssystem enthält einen zentralen Transportroboter 1, eine oder mehrere Bearbeitungsstationen 2, welche mit Schweiß-, Klebe- und/ oder sonstigen Bearbeitungsrobotern 2.1...2.3 bestückt sind, zwei räumlich zu einer Doppelstation 3 kombinierte Ladestationen 3.1 und 3.2, die jeweils sowohl als Bauteilein- als auch -ausgabestelle betrieben werden, und eine im Arbeitsbereich des Transportroboters 1 angeordnete Werkzeugwechselstelle 4, an welcher typenmäßig verschiedenartige, jeweils mit dem entsprechenden Bauteiltyp im unbearbeiteten Zustand beladene Aufnahmewerkzeuge 5' gelagert sind. Die Bauteile 6 können jeweils aus einem einzelnen Werkstück, aber auch aus mehreren Einzelelementen bestehen und werden an den zugeordneten Aufnahmewerkzeugen 5 lagenau fixiert. Am Transportroboter 1 werden die Aufnahmewerkzeuge 5 über eine automatische Kupplung an- und abgekuppelt.

Das Fertigungssystem arbeitet wie folgt:

Es sei angenommen, dass sich an einer der Ladestationen, z. B. der Ladestation 3.1, ein Aufnahmewerkzeug 5A mit einem fertig bearbeiteten Bauteil 6A befindet, während die benachbarte Ladestation 3.2 unbesetzt ist, weil zuvor ein Aufnahmewerkzeug 5B mit einem unbearbeiteten Bauteil 6B vom gleichen Typ wie diejenigen an der Ladestation 3.1 vom Transportroboter 1 an die Bearbeitungsstation 2 befördert wurde, wo das Bauteil 6B - eventuell unter entsprechend vorprogrammierten Steuerbewegungen des Transportroboters 1 - von diesem bearbeitungsgerecht gehalten wird. Nach Beendigung des Bearbeitungsvorgangs wird das Aufnahmewerkzeug 5B mit dem nunmehr fertig bearbeiteten Bauteil 6B zu der unbesetzten Ladestation 3.2 verfahren und dort abgekuppelt, woraufhin das zwischenzeitlich entladene und mit einem noch unbearbeiten Bauteil 6A erneut beladene Aufnahmewerkzeug 5A an der Nachbarstation 3.1 an den Transportroboter 1 angekuppelt und von diesem an die Bearbeitungsstation 2 und nach Beendigung des Bearbeitungsvorgangs zur Ladestation 3.1 zurückgefördert wird, während gleichzeitig das zuvor an der Ladestation 3.2 abgelegte Aufnahmewerkzeug 5B durch einen Werker W oder eine Übergabevorrichtung von dem fertig bearbeiteten Bauteil 6B ent- und mit einem noch unbearbeiteten Bauteil 6B beladen wird. Dieser alternierende Arbeitsablauf wiederholt sich, bis der Fertigungsprozess auf einen anderen Bauteiltyp umgestellt werden muss.

In diesem Fall wird ein ent- und mit einem unbearbeiteten Bauteil 6 beladenes Aufnahmewerkzeug 5 durch den Transportroboter 1 von der jeweiligen Ladestation 3.1 oder 3.2 nicht zur Bearbeitungsstation 2 sondern zur Werkzeugwechselstation 4 befördert, wo es zusammen mit dem Bauteil 6 auf einem freien Speicherplatz abgelegt und gegen ein Aufnahmewerkzeug 5' einschließlich eines noch unbearbeiteten Bauteils 6' vom Nachfolgetyp ausgetauscht wird, woraufhin der so bestückte Transportroboter 1 unmittelbar zur Bearbeitungsstation 2 und im Anschluss an die Bauteilbearbeitung zu der zuvor freigewordenen Ladestation 3.1 bzw. 3.2 verschwenkt und dort das ausgewechselte Aufnahmewerkzeug 5' mit dem fertiggestellten Bauteil 6' absetzt. Ebenso wird das zwischenzeitlich an der anderen Ladestation 3.2 bzw. 3.1 ent- und beladene Aufnahmewerkzeug 5 des bisherigen Typs an der Werkzeugwechselstation 4 gegen ein mit einem unbearbeiteten Bauteil 6' beladenes Aufnahmewerkzeug 5' des Nachfolgetyps ausgetauscht und dieses auf dem Weg über die Bearbeitungsstation 2 und zurück zu der freien Ladestation 3.2 bzw. 3.1 in den Fertigungsprozess eingeschleust. Daraufhin ist der Modellwechsel beendet und der Fertigungsprozess kann auf die zuvor beschriebene Weise, aber nunmehr mit dem neuen Bauteiltyp fortgesetzt werden.

Eine Besonderheit des beschriebenen Fertigungssystems besteht darin, dass die beiden Ladestationen 3.1 und 3.2 mit zwei typenmäßig unterschiedlichen Aufnahmewerkzeugen 5 betrieben werden können, so dass sich zwei verschiedene Bauteiltypen in ständig alternierender Folge ohne den Umweg über die Werkzeugwechselstation 4 bearbeiten lassen. Da an jeder der beiden Ladestationen 3.1 und 3.2 stets das gleiche Aufnahmewerkzeug 5 abgelegt und somit immer der gleiche Bauteiltyp ent- und beladen wird, wird trotz der wechselweisen Bearbeitung typenmäßig unterschiedlicher Bauteile 6 eine je Ladestation typenreine Bauteilein- und -ausgabe erreicht und dadurch die Bauteilzu- und -abfuhr wesentlich erleichtert.

## Patentansprüche

1. Fertigungssystem für Bauteile (6), insbesondere Karosseriebauteile mit austauschbaren, jeweils einzeln durch eine Transporteinrichtung (1) beförderbaren Bauteil-Aufnahmewerkzeugen (5), welche von einer Eingabestelle im bauteilbestückten Zustand zu mindestens einer Bearbeitungsstation (2) verfahrbar und dort während der Bauteilbearbeitung unter lagegenauer Fixierung positionierbar und anschließend zu einer Ausgabestelle zur Entnahme der bearbeiteten Bauteile (6) transportierbar sind, wobei die Eingabe- und die Ausgabestelle jeweils sowohl als Bauteilentlade- als auch als Bauteilbeladestation (3.1, 3.2) vorgesehen und **dadurch gekennzeichnet, dass** die Bauteil Aufnahmewerkzeuge (5) im Fertigungstakt alternierend jeweils an einer der Bauteil Ent- und Bauteil-Beladestationen (3.1 bzw. 3.2) an die Transporteinrichtung (1) angekuppelt und durch diese an der Bearbeitungsstation (2) positioniert sind, während ein weiteres Aufnahmewerkzeug (5) von der Transporteinrichtung abgekuppelt und an der jeweils anderen Ladestation (3.2 bzw. 3.1) ent- und beladbar ist.

2. Fertigungssystem nach Anspruch 1, **dadurch gekennzeichnet, dass** die beiden Ladestationen (3.1, 3.2) räumlich zu einer Doppelstation (3) kombiniert sind.

3. Fertigungssystem nach Anspruch 1 oder 2, **dadurch gekennzeichnet, dass** zur wechselweisen Bearbeitung zweier unterschiedlicher Bauteiltypen ein einzelnes Paar von entsprechend den Bauteiltypen unterschiedlichen Aufnahmewerkzeugen (5) vorgesehen ist, von denen das eine an der einen Ladestation (3.1 oder 3.2) und zu diesem im Wechsel das typenmäßig andere an der anderen Ladestation (3.1 oder 3.2) be- und entladbar ist.

4. Fertigungssystem nach einem der vorhergehenden Ansprüche, **dadurch gekennzeichnet, dass**
die Transporteinrichtung (1) aus einem zentralen Transportroboter besteht.

5. Fertigungssystem nach einem der vorhergehenden Ansprüche, **dadurch gekennzeichnet, dass**
im Arbeitsbereich der Transporteinrichtung (1) eine Werkzeugwechselstelle (4) zum Austausch eines Aufnahmewerkzeugs (5) gegen ein typenmäßig anderes (5') angeordnet ist.

6. Fertigungssystem nach Anspruch 5, **dadurch gekennzeichnet, dass** die an der Werkzeugwechselstelle (4) ausgetauschten Aufnahmewerkzeuge (5, 5') mit Bauteilen (6 bzw. 6') im unbearbeiteten Zustand bestückt sind.

## Claims

1. A system for producing components (6), especially vehicle-body components, comprising interchangeable component-holding tools (5) individually conveyed by a conveyor (1), the tools being movable from an input place, when fitted with components, to at least one processing station (2), where they are accurately fixed in position during the processing operation and then conveyed to an output place for removing the components (6) after processing, wherein the input place and the output place are each in the form of a component-unloading and a component-loading station (3.1, 3.2) and **characterised in that**, during the processing cycle, the component-holding tools (5) are alternately coupled to one of the component-unloading and component-loading stations (3.1 or 3.2) on the conveyor (1) and positioned thereby at the processing station (2), whereas another component-holding tool (5) is uncoupled from the conveyor and loaded and unloaded at the respective other loading station (3.2 or 3.1).

2. A production system according to claim 1, **characterised in that**
the two loading stations (3.1, 3.2) are combined in one space to form a double station (3).

3. A production system according to claim 1 or claim 2, **characterised in that**
in order to process two different types of components alternately, a single pair of holding tools (5), differing in correspondence to the types of components, are provided, one type being loaded and unloaded at one loading station (3.1 or 3.2) and the other type being alternately loaded and unloaded at the other loading station (3.1 or 3.2).

4. A production system according to any of the preceding claims, **characterised in that**
the conveyor (1) is in the form of a central robot.

5. A production system according to any of the preceding claims, **characterised in that**
a tool change-over place (4) is situated in the working area of the conveyor (1) in order to replace a holding tool (5) by a different type (5') thereof.

6. A production system according to claim 5, **characterised in that** the holding tools (5, 5') replaced at the change-over place (4) are equipped with components (6 or 6') in the un-processed state.

## Revendications

1. Système de fabrication pour des composants (6), notamment des composants de carrosserie comportant des outils de réception de composants (5) interchangeables, transportés chaque fois séparément par une installation de transport (1), et qui sont déplacés d'une position de réception à l'état chargé du composant vers au moins un poste de travail (2) et de là, pour être positionnés, pendant le travail sur le composant avec une fixation précise en position et ensuite être transférés à un poste de sortie pour prélever le composant (6), traité,
le poste d'entrée et le poste de sortie étant prévus chacun à la fois comme poste de déchargement de composant et comme poste de chargement de composant (3.1, 3.2), et
système **caractérisé en ce que**
les outils (5) de réception de composant étant couplés à l'installation de transport (1), selon la cadence de fabrication, en alternance, chaque fois à un poste de déchargement et à un poste de chargement de composant (3.1, 3.2) en étant positionnés par cette installation sur le poste de travail (2) pendant qu'un autre outil de réception (5) est découplé de l'installation de transport pour être chargé et déchargé chaque fois à l'autre poste de chargement (3.2, 3.1).

2. Système de fabrication selon la revendication 1,
**caractérisé en ce que**
les deux postes de chargement (3.1, 3.2) sont combinés dans l'espace pour former un poste double (3).

3. Système de fabrication selon la revendication 1 ou 2,
**caractérisé en ce que**
pour travailler en alternance deux types différents de composants, il est prévu une unique paire d'outils de réception (5) différents selon le type de composant, dont l'un peut être chargé et déchargé dans l'un des postes de chargement (3.1 ou 3.2) et en alternance à celui-ci, l'autre de type différent, est chargé et déchargé dans l'autre poste de chargement (3.1 ou 3.2).

4. Système de fabrication selon l'une des revendications précédentes, **caractérisé en ce que**
l'installation de transport (1) se compose d'un seul robot central de transport.

5. Système de fabrication selon l'une des revendications précédentes, **caractérisé en ce que**
dans la plage de travail de l'installation de transport (1), il est prévu un poste de changement d'outil (4) pour échanger un outil de réception (5) contre un autre type d'outil (5').

6. Système de fabrication selon la revendication 5,
**caractérisé en ce que**
les outils de réception (5, 5') échangés dans le poste de changement d'outil (4) sont garnis de composants (6, 6') non encore travaillés.
